(19) Europäisches Patentamt
European Patent Office
Office européen des brevets

(11) **EP 4 765 414 A1**

(12) **EUROPEAN PATENT APPLICATION**
published in accordance with Art. 153(4) EPC

(43) Date of publication:
**24.06.2026 Bulletin 2026/26**

(21) Application number: 25807801.3

(22) Date of filing: **19.05.2025**

(51) International Patent Classification (IPC):
*H01M 50/317* (2021.01)   *H01M 50/30* (2021.01)
*H01M 50/105* (2021.01)   *B32B 7/12* (2006.01)
*C09J 123/30* (2006.01)   *C09J 11/04* (2006.01)

(52) Cooperative Patent Classification (CPC):
B32B 7/12; C09J 11/04; C09J 123/30;
H01M 50/105; H01M 50/30; H01M 50/317;
Y02E 60/10

(86) International application number:
**PCT/KR2025/006743**

(87) International publication number:
**WO 2025/244371 (27.11.2025 Gazette 2025/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024 KR 20240066764**

(71) Applicant: LG Energy Solution, Ltd.
Seoul 07335 (KR)

(72) Inventors:
• LEE, Yu Jin
Daejeon 34122 (KR)
• PARK, Eun Suk
Daejeon 34122 (KR)
• JU, Hye Yeong
Daejeon 34122 (KR)
• YU, Hyung Kyun
Daejeon 34122 (KR)

(74) Representative: Plasseraud IP
104 Rue de Richelieu
CS92104
75080 Paris Cedex 02 (FR)

(54) **POUCH-TYPE SECONDARY BATTERY**

(57)   A pouch type secondary battery which comprises an electrode assembly; a battery case comprising an accommodation portion for accommodating the electrode assembly and a terrace portion formed along a perimeter of the accommodation portion; an electrode lead connected to the electrode assembly and protruding to the outside of the battery case via the terrace portion; a lead film disposed between the electrode lead and the battery case; and a gas guide film disposed between the electrode lead and the lead film, wherein the terrace portion comprises a sealing portion with a portion thereof sealed along the perimeter of the accommodation portion, and the lead film comprises inorganic particles is provided. The pouch type secondary battery includes inorganic particles in a gas permeable lead film, and may thus improve gas discharge performance.

FIG.6

**Description**

## TECHNICAL FIELD

### Cross-reference to Related Applications

The present application claims the benefit of the priority of Korean Patent Application No. 10-2024-0066764, filed on 5/22/2024, which is hereby incorporated by reference in its entirety.

### Technical Field

The present invention relates to a pouch type secondary battery, and more particularly, to a pouch type secondary battery including a lead film containing inorganic particles, and a gas guide film.

## BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickel-hydrogen batteries, lithium ion batteries, and lithium ion polymer batteries.
The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified into pouch type secondary batteries and can type secondary batteries according to a material of a case accommodating an electrode assembly. In particular, the pouch type batteries may be manufactured by performing press processing on a ductile pouch film laminate to form a cup portion, and then accommodating an electrode assembly in an accommodation space inside the cup portion and sealing a sealing portion.
The pouch type secondary batteries may generate gas inside a pouch when operated at high temperatures, overcharged, or brought with a short circuit. When the gas pressure inside the pouch increases, the pouch may get vented to explode or ignite.
To overcome the limitations described above, research has been undertaken into different types of gas discharge components, and there is a growing need for a gas discharge component designed to manage gas discharge, external moisture intrusion, and electrolyte leakage, a gas discharge component with high internal pressure resistance but low operating pressure, and moreover, a gas discharge component exhibiting high durability.

## DISCLOSURE OF THE INVENTION

### TECHNICAL PROBLEM

An aspect of the present invention provides a pouch type secondary battery having a gas discharge function provided by a gas guide film. The pouch type secondary battery includes inorganic particles in a lead film through which gas directly permeates, and may thus remove HF gas generated by moisture, thereby preventing corrosion of an electrode lead and improving gas discharge rate.

### TECHNICAL SOLUTION

[1] According to an aspect of the present invention, provided is a pouch type secondary battery including an electrode assembly, a battery case including an accommodation portion for accommodating the electrode assembly and a terrace portion formed along a perimeter of the accommodation portion, an electrode lead connected to the electrode assembly and protruding to the outside of the battery case via the terrace portion, a lead film disposed between the electrode lead and the battery case, and a gas guide film disposed between the electrode lead and the lead film, wherein the terrace portion includes a sealing portion with a portion thereof sealed along the perimeter of the accommodation portion, and the lead film includes inorganic particles.
[2] The present invention provides the pouch type secondary battery according to [1] above, wherein at an interface between the lead film and the gas guide film, a gas permeable portion formed on the outside of the sealing portion, and a gas channel formed via the sealing portion, connecting the gas permeable portion and the inside of the battery case may be provided.

[3] The present invention provides the pouch type secondary battery according to [1] and/or [2] above, wherein when gas is generated inside the battery case, an interface between the lead film and the gas guide film opens to allow the generated gas to be discharged to the outside through the lead film on the gas permeable portion via the gas channel.

[4] The present invention provides the pouch type secondary battery according to at least one of [1] to [3] above, wherein the lead film may have a structure in which a pouch adhesive layer, a core layer, and a lead adhesive layer are sequentially stacked, and the inorganic particles may be provided in at least one layer selected from the group consisting of the core layer and the lead adhesive layer.

[5] The present invention provides the pouch type secondary battery according to at least one of [1] to [4] above, wherein the lead film may have a structure in which a pouch adhesive layer, a core layer, and a lead adhesive layer are sequentially stacked, and the inorganic particles may be provided in the core layer.

[6] The present invention provides the pouch type secondary battery according to at least one of [1] to [5] above, wherein the inorganic particles may be further provided in the lead adhesive layer.

[7] The present invention provides the pouch type secondary battery according to at least one of [1] to [6] above, wherein the inorganic particles may include at least one selected from the group consisting of $CaCO_3$, $Ca(OH)_2$, $CaCl_2$, CaO, KOH, NaOH, and $Na_2CO_3$.

[8] The present invention provides the pouch type secondary battery according to at least one of [1] to [7] above, wherein the inorganic particles may be provided in an amount of 1 wt% to 20 wt% with respect to a total weight of the lead film.

[9] The present invention provides the pouch type secondary battery according to at least one of [1] to [8] above, wherein the lead film may be disposed such that one end protruding outward of the battery case protrudes further than one end of the gas guide film protruding outward of the battery case and is in direct contact with the electrode lead.

[10] The present invention provides the pouch type secondary battery according to at least one of [1] to [9] above, wherein the gas guide film may have a structure in which an adhesive resin layer and a permeable resin layer are stacked from an upper surface of the electrode lead.

[11] The present invention provides the pouch type secondary battery according to [10] above, wherein the adhesive resin layer may include at least one selected from the group consisting of acid modified polypropylene (PPa) and acid modified polyethylene (Pea).

[12] The present invention provides the pouch type secondary battery according to [10] and/or [11] above, wherein the permeable resin layer may include at least one selected from the group consisting of polyimide (PI) and polytetrafluoroethylene (PTFE).

[13] The present invention provides the pouch type secondary battery according to at least one of [10] to [12] above, wherein a ratio (D1/D2) of a thickness (D1) of the adhesive resin layer to a thickness (D2) of the permeable resin layer may be 0.4 to 2.0.

[14] The present invention provides the pouch type secondary battery according to at least one of [10] to [13] above, wherein in the adhesive resin layer, one end protruding outward of the battery case may protrude further than one end of the permeable resin layer protruding outward of the battery case.

## ADVANTAGEOUS EFFECTS

A pouch type secondary battery according to the present specification has a function of discharging gas through a gas permeable portion and a gas channel formed between a gas guide film and a lead film, and includes inorganic particles in the lead film through which gas directly permeates in the gas permeable portion, and may thus remove HF gas generated by moisture, thereby preventing corrosion of an electrode lead. This, in turn, is expected to improve the durability of the pouch type secondary battery. In addition, the inclusion of inorganic particles in the lead film induces an increase in porosity of the film, and accordingly, gas discharge rate is improved without increasing moisture penetration, thereby improving gas discharge performance, and consequently providing a pouch type secondary battery exhibiting enhanced safety.

## BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.

FIG. 1 is an exploded view of a pouch type secondary battery according to an embodiment of the present specification;
FIG. 2 is a cross-sectional view of a sealed pouch type secondary battery;
FIG. 3 is an example of an enlarged cross-sectional view of a portion of box A of FIG. 2, showing a state before an interface between a lead film and a gas guide film is opened;

FIG. 4 is an example of an enlarged cross-sectional view of a portion of box A of FIG. 2, specifically showing a lead film in a state before an interface between the lead film and a gas guide film is opened;

FIG. 5 is an example of an enlarged cross-sectional view of a portion of box A of FIG. 2, specifically showing a lead film in a state before an interface between the lead film and a gas guide film is opened;

FIG. 6 is an example of an enlarged cross-sectional view of a portion of box A of FIG. 2, showing a state in which an interface between a lead film and a gas guide film is opened;

FIG. 7 is another example of an enlarged cross-sectional view of a portion of box A of FIG. 2, showing a state before an interface between a lead film and a gas guide film is opened;

FIG. 8 is yet another example of an enlarged cross-sectional view of a portion of box A of FIG. 2, showing a state before an interface between a lead film and a gas guide film is opened;

FIG. 9 is an example of a top perspective view of a portion of box A of FIG. 2 in direction B; and

FIG. 10 is another example of a top perspective view of a portion of box A of FIG. 2 in direction B.

## MODE FOR CARRYING OUT THE INVENTION

Advantages and features of the present invention described herein and methods of accomplishing the same may be understood more readily by reference to the following detailed description of embodiments and the accompanying drawings. However, the present invention may be embodied in different forms, and these embodiments are provided only to make this invention thorough and complete and to fully convey the scope of the present invention to those skilled in the art, and thus the present invention is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the present invention but for describing embodiments. As used herein, singular terms are intended to include plural forms as well, unless the context clearly indicates otherwise. The meaning of "comprises" and/or "comprising" as used herein does not exclude the presence or addition of one or more other components besides a mentioned component.

As used herein, when an element "includes" a component, it may indicate that the element does not exclude another component unless explicitly described to the contrary, but may further include another component.

As used herein, the description "A and/or B" refers to A or B, or A and B.

As used herein, "%" indicates wt% unless indicated otherwise.

In an aspect of the present specification, a pouch type secondary battery includes an electrode assembly, a battery case including an accommodation portion for accommodating the electrode assembly and a terrace portion formed along a perimeter of the accommodation portion, an electrode lead connected to the electrode assembly and protruding to the outside of the battery case via the terrace portion, a lead film disposed between the electrode lead and the battery case, and a gas guide film disposed between the electrode lead and the lead film, wherein the terrace portion includes a sealing portion with a portion thereof sealed along the perimeter of the accommodation portion, and the lead film includes inorganic particles.

Generally, the gas discharge performance of a gas guide film is determined by the properties of materials constituting the gas guide film. The properties of materials may dictate moisture penetration prevention performance and electrolyte leakage prevention performance, and gas permeability, which also varies depending on materials, thus makes materials constituting the gas guide film a deciding factor.

Factors that may improve gas discharge performance regardless of material include designing an area of a gas permeable portion formed on the gas guide film and a width of a gas channel formed on the gas guide film to connect from the inside of the battery case to the gas permeable portion, thereby improving gas discharge performance, and moisture penetration and electrolyte leakage prevention performance.

When using a cell that applies materials which inevitably generate a large amount of gas, there may be limitations in discharging gas generated inside a pouch type secondary battery with the material and design of the gas guide film. In addition, pouch type secondary batteries with gas discharge function applied with a gas guide film are bound to be vulnerable in preventing moisture penetration and protecting electrode leads from corrosion caused by hydrofluoric acid gas (HF gas) generated from an electrolyte during a side reaction.

This specification provides a pouch type secondary battery exhibiting significantly improved durability and safety by including inorganic particles in a lead film which directly permeates gas to the outside and continuously contacts the generated gas to prevent corrosion of an electrode lead caused by internally generated HF gas while further improving gas discharge performance and limiting the amount of moisture penetration.

First, respective components of the pouch type secondary battery of the present invention will be described in more detail with reference to the drawings.

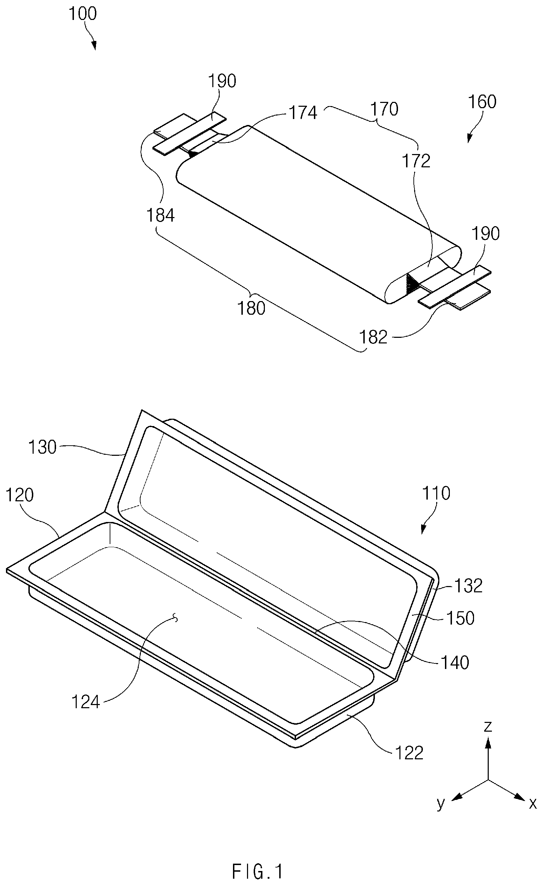

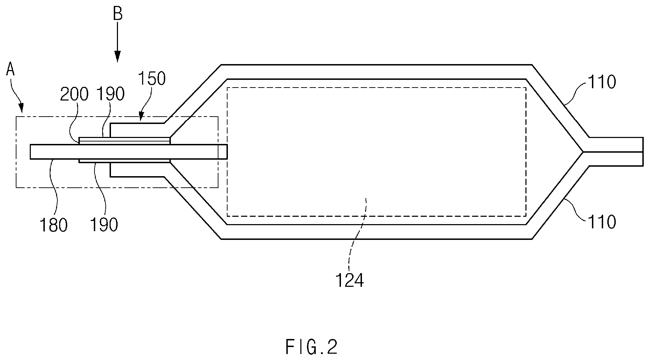

FIG. 1 is an exploded view of a pouch type secondary battery 100 according to an embodiment of the present specification, and FIG. 2 is a cross-sectional view of a sealed pouch type secondary battery 100. In FIG. 2, some components of the pouch type secondary battery 100 are not provided for convenience of understanding. As shown in FIGS. 1 and 2, the pouch type secondary battery 100 of the present invention includes a battery case 110, an electrode assembly 160, an electrode lead 180, a lead film 190, and a gas guide film 200.

## (1) Battery case

In an aspect, the battery case 110 may accommodate the electrode assembly 160 inside. The battery case 110 may be manufactured by molding a pouch film laminate. In this case, the pouch film laminate may include a base layer, a gas barrier layer, and a sealant layer. In the pouch film laminate, the base layer, the gas barrier layer, and the sealant layer may be sequentially stacked.

The base layer is formed on an outermost layer of the pouch film laminate to protect a secondary battery against external friction and collision. The base layer is made of a polymer and may thus electrically insulate an electrode assembly from the outside.

The base layer may be made of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the base layer may be made of polyethylene terephthalate (PET), nylon, or a combination thereof, which has abrasion resistance and heat resistance.

The base layer may have a single film structure made of any one material. Alternatively, the base layer may have a composite film structure in which two or more materials are respectively formed as layers.

The base layer may have a thickness of 5 $\mu$m to 50 $\mu$m, specifically 7 $\mu$m to 40 $\mu$m, more specifically 25 $\mu$m to 38 $\mu$m. When the thickness of the base layer satisfies the above range, external insulation is excellent, and the entire pouch is not thick, and accordingly, energy density to volume of the secondary battery may be excellent.

The gas barrier layer is stacked between the base layer and the sealant layer to secure mechanical strength of the pouch, block the entry and exit of gases or moisture outside the secondary battery, and prevent electrolyte leakage from the inside of the battery case.

The gas barrier layer may be formed of metal, and may specifically be formed of an aluminum alloy thin film. When forming a gas barrier layer using an aluminum alloy thin film, gas barrier layer may have a predetermined level of mechanical strength and also be light in weight, and may complement electrochemical properties caused by the electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer may have a thickness of 40 $\mu$m to 100 $\mu$m, specifically 50 $\mu$m to 90 $\mu$m, more specifically 55 $\mu$m to 85 $\mu$m. When the thickness of the gas barrier layer satisfies the above range, moldability and gas barrier performance are excellent when molding a cup portion.

The sealant layer is thermally bonded together at a sealing portion when the battery case accommodating the electrode assembly inside is sealed to completely seal the inside of the battery case. To this end, the sealant layer may be formed of a material having excellent heat sealing strength.

The sealant layer may be formed of a material having insulation, corrosion resistance, and sealing properties. Specifically, the sealant layer is in direct contact with the electrode assembly and/or electrolyte inside the battery case, and may thus be formed of a material having insulation and corrosion resistance. In addition, the sealant layer is supposed to completely seal the inside of the battery case and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material.

The sealant layer may be made of at least one material selected from the group consisting of polyethylene, polypropylene, polycarbonate, polyethylene terephthalate, polyvinyl chloride, acrylic-based polymer, polyacrylonitrile, polyimide, polyamide, cellulose, aramid, nylon, polyester, polyparaphenylene benzobisoxazole, polyarylate, teflon, and glass fiber, and may preferably be made of a polyolefin-based resin such as polypropylene (PP) and/or polyethylene (PE). In this case, the polypropylene may be composed of cast polypropylene (CPP), acid modified polypropylene (PPa), polypropylene-ethylene copolymer, and/or polypropylene-butylene-ethylene terpolymer.

The sealant layer may have a thickness of 30 $\mu$m to 130 $\mu$m, specifically 50 $\mu$m to 120 $\mu$m, and more specifically 70 $\mu$m to 100 $\mu$m. When the thickness of the sealant layer satisfies the above range, there is an effect of both securing the sealing strength of a sealing portion and securing the formability of a pouch film laminate.

Meanwhile, the pouch film laminate may be drawn, molded, or stretched by a punch or the like to manufacture the battery case 110. Accordingly, the battery case 110 may include a cup portion 122 and an accommodation portion 124. The accommodation portion 124 is a place to accommodate the electrode assembly, and may indicate an accommodation space formed in the shape of a pocket inside the cup portion 122 as the cup portion 122 is formed.

In an aspect, the battery case 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the embodiment of the present invention is not limited thereto, and the first case 120 and the second case 130 may be diversely manufactured, for example, individually manufactured by being separated from each other.

In another aspect, when forming a cup portion in the pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 formed between the two cup portions 122 and 132 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than when there is only one cup portion 122 may be accommodated. In addition, one edge of the secondary battery 100 is formed by folding the battery case 110, and accordingly, the number of edges to be sealed may be reduced when a sealing process is performed later. Accordingly, the process speed of the pouch type secondary battery 100 may be improved and the number of sealing processes may be reduced.

The battery case 110 may be sealed while accommodating the electrode assembly 160 so that a portion of an electrode lead 180, which will be described later, i.e., a terminal portion, is exposed. Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, an electrolyte is injected into the accommodation portion 124 and a portion of a terrace portion 150 formed along a perimeter of the first case 120 and the second case 13) may be sealed to form a sealing portion (not shown).

The sealing portion may serve to seal the accommodation portion 124. Specifically, the sealing portion may seal the accommodation portion 124 by being formed on the terrace portion 150 formed along the perimeter of the accommodation portion 124.

The temperature at which the sealing portion is sealed may be 180°C to 250°C, specifically 200°C to 250°C, and more specifically 210°C to 240°C. When the sealing temperature satisfies the numerical range described above , the battery case 110 may obtain sufficient sealing strength through thermal bonding.

### (2) Electrode assembly

In an aspect, the electrode assembly 160 may be inserted into the battery case 110 and sealed through the battery case 110 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

The electrode tab 170 is connected to each of the positive electrode and the negative electrode of the electrode assembly 160, and protrudes outward from the electrode assembly 160, and may thus serve as a path through which electrons move between the inside and the outside of the electrode aseembly. A current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (3) Electrode lead

In an aspect, the electrode lead 180 may supply electricity to the outside of the secondary battery 100. The electrode lead 180 may be connected to the electrode tab 170 of the electrode assembly 160 through spot welding, or the like.

The electrode lead 180 may be connected to the electrode assembly 160 and may protrude to the outside of the battery case 110 via the sealing portion 151. Specifically, one end of the electrode lead 180 may be connected to the electrode assembly 160, particularly to the electrode tab 170, and the other end of the electrode lead 180 may protrude to the outside of the battery case 110 via the terrace portion 150.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

One side of the electrode lead 180, which is in direct contact with the lead film 190 and/or the gas guide film 200, may be coated with at least one selected from the group consisting of chromium (Cr), nickel (Ni), aluminum oxide ($Al_2O_3$), zirconium (Zr)-based anhydride salt, and titanium (Ti)-based anhydroxide salt. In this case, corrosion resistance against an electrolyte solution and adhesion to the lead film 190 and/or the gas guide film 200 may be obtained.

### (4) Lead film

In an aspect, the lead film 190 may prevent electricity generated from the electrode assembly 160 from flowing to the battery case 110 through the electrode lead 180, and allow the sealing of the battery case 110 to be maintained. To this end, the lead film 190 may be formed of a non-conductor having nonconductive properties in which electricity does not flow well. In general, as the lead film 190, relatively thin insulation tape easily attached to the electrode lead 180 and/or the gas guide film 200 is widely used, but the embodiment of the present invention is not limited thereto, and thus any member capable of insulating the electrode lead 180 may be used.

The lead film 190 may be disposed to surround an outer circumferential surface of the electrode lead 180 and the gas guide film 200. Specifically, the electrode lead 180 and the gas guide film 200 are in contact with each other on one side, and in this case, at least a portion of the electrode lead 180 and the gas guide film 200 may be surrounded by the lead film 190. The lead film 190 may be placed in the sealing portion 151 in which the first case 120 and the second case 130 of the battery case 110 are thermally fused, and may make the electrode lead 180 and the gas guide film 200 adhere to the battery case 110.

In an aspect, the lead film 190 may be disposed such that one end of the lead film 190 protruding outward of the battery case 110 protrudes further outward than one end of the gas guide film 200, particularly the adhesive resin layer 210, which will be described later, so as to directly contact the electrode lead 180. As such, when the lead film 190 is formed to protrude further outward of the battery case 110 than one end of the gas guide film 200, adhesion between the electrode lead 180 and the gas guide film 200, and between the electrode lead 180 and the lead film 190 is strong, thereby preventing a decrease in durability due to an increase in internal pressure, and easily securing an area of the gas permeable portion 230 on the gas guide film 200, enabling stable gas discharge.

The lead film 190 may be disposed between the electrode lead 180 and/or the gas guide film 200 and the battery case 110. For example, as shown in FIG. 2, a lower case 110, a lead film 190, an electrode lead 180, a gas guide film 200, a lead film 190, and an upper case 110 may be stacked and disposed in this order in the terrace portion 150.

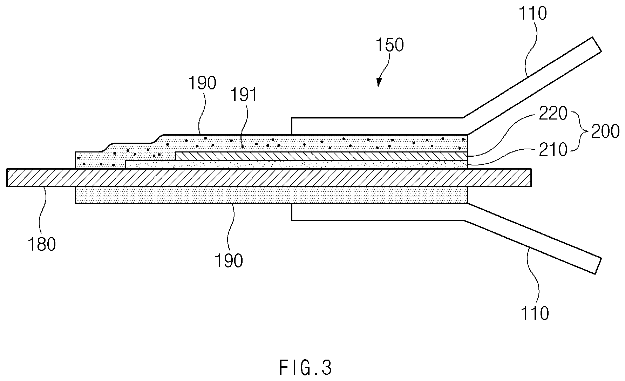

FIGS. 3 to 5 are enlarged cross-sectional views of a portion corresponding to box A of FIG. 2, showing a lead film 190 including inorganic particles 191. With reference to these, the inorganic particles 191 in the lead film 190 will be described.

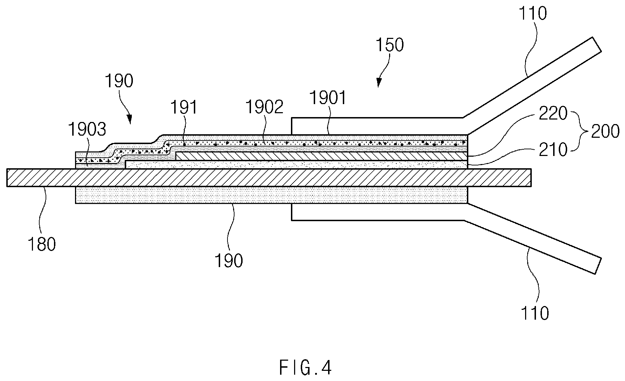

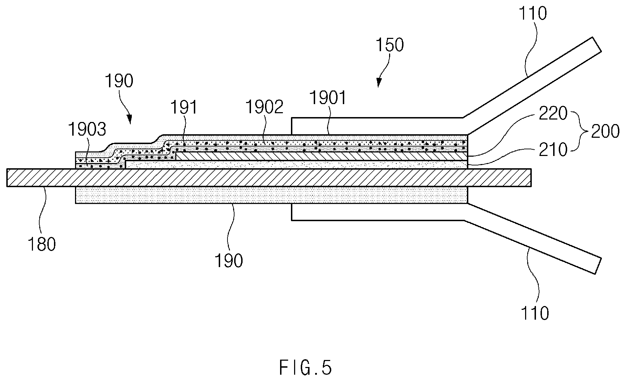

Referring to FIG. 3, the pouch type secondary battery according to an embodiment of the present invention includes the inorganic particles 191 in the lead film 190. In addition, the lead film 190 may have a multilayer structure including at least one layer, as in FIGS. 4 and 5. Specifically, the lead film 190 may include a pouch adhesive layer 1901, a core layer 1902, and a lead adhesive layer 1903, which are sequentially stacked.

The inorganic particles 191 may be included in at least one layer selected from the group consisting of the core layer 1902 and the lead adhesive layer 1903, and preferably may be included in the core layer 1902. In addition, as shown in FIG. 4, the inorganic particles 191 may be included in the core layer 1902, and additionally may be further included in the lead adhesive layer 1903, and for example, as shown in FIG. 5, the inorganic particles 191 may be included in two layers within the lead film 190. However, it may be desirable not to include the inorganic particles in the pouch adhesive layer 1901. When the pouch adhesive layer also includes inorganic particles, gas discharge performance is further improved, but sealing strength is reduced. Therefore, to improve the durability of a battery itself, which relies on adhesion between the battery case and the lead film, it may be desirable not to include inorganic particles in the pouch adhesive layer. The inorganic particles 191, when included in the lead film 190, may serve to increase the porosity of the lead film 190, allowing gas to be discharged better, and since the inorganic particles may absorb hydrofluoric acid gas, a significant improvement may also be expected in the function of preventing corrosion of the electrode lead caused by hydrofluoric acid gas generated inside the battery.

The inorganic particles may include at least one selected from the group consisting of, for example, $CaCO_3$, $Ca(OH)_2$, $CaCl_2$, CaO, KOH, NaOH, and $Na_2CO_3$, preferably $CaCO_3$, $Ca(OH)_2$, $CaCl_2$, and/or CaO, and more preferably $CaCO_3$, $Ca(OH)_2$, and/or CaO. When such inorganic particles are applied, the absorption performance of hydrofluoric acid gas may be excellent.

In addition, the inorganic particles may be included in an amount of 1 wt% to 20 wt% with respect to a total weight of the lead film. The inorganic particles may preferably be included in an amount of 2 wt% to 18 wt%, 3 wt% to 17 wt%, or 5 wt% to 15 wt%, and when included in the above range, the inorganic particles may offer a benefit of excellently performing the function of removing moisture or hydrofluoric acid gas without hindering the flexibility of the lead film. Furthermore, when the inorganic particles are included in at least one of the three layers of the lead film, the inorganic particles may be included in an amount of 5 wt% to 15 wt%, preferably 6 wt% or greater, 7 wt% or greater, with respect to a total weight of each included layer, and may also be included in an amount of 14 wt% or less, 13 wt% or less, and the inclusion of the inorganic particles within this range may be beneficial for the above-described performance improvement and maintenance.

Meanwhile, the pouch adhesive layer 1901 may be a layer in direct contact with the battery case 110, specifically the sealant layer of the battery case 110. The pouch adhesive layer 1901 may include polypropylene or polyolefin elastomer (POE), but is not limited thereto. In particular, the polymer included in the pouch adhesive layer 1901 may be a copolymer. The melting point of the pouch adhesive layer 1901 including a copolymer may be controlled within the above numerical range, and the pouch adhesive layer 1901 has a melting point similar to that of the polymer in the sealant layer of the battery case 110, which serves better for securing sealing processability. The pouch adhesive layer 1901 may have a thickness of 40 μm to 100 μm, specifically 40 μm to 80 μm, more specifically 40 μm to 60 μm. When the thickness of the pouch adhesive layer 1901 satisfies the above numerical range, there is an effect of securing a polymer (e.g., polypropylene) residual rate sufficient to obtain strength for sealing between the electrode lead and the battery case 110.

The core layer 1902 may be a layer placed at the center of the lead film 190. The core layer 1902 may include additives such as polypropylene, polyolefin elastomer (POE), and/or colorant, but is not limited thereto. In particular, the polymer included in the core layer 1902 may be a homopolymer. When the homopolymer is included in the core layer 1902, the melting point of the core layer 1902 may be controlled within the above numerical range and deformation caused by heat may be minimized, which serves better for securing insulation. The core layer 1902 may have a thickness of 40 μm to 70 μm, specifically 50 μm to 70 μm, and more specifically 60 μm to 70 μm. When the thickness of the core layer 1902 satisfies the above numerical range, deformation caused by heat applied upon fusion and sealing may be prevented to bring about a robust design effect in terms of securing insulation.

The lead adhesive layer 1903 is in direct contact with the electrode lead 180 and may be used to make the lead film 190 adhere to the electrode lead 180. The lead adhesive layer 1903 may include any material that easily adheres to the electrode lead 180. Specifically, the metal adhesive layer may include acid modified polyolefin. For example, the lead adhesive layer 1903 may include at least one of acid modified polypropylene (PPa), acid modified polyethylene (PEa), or plasma-treated polypropylene (PP), but is not limited thereto. The lead adhesive layer 1903 may have a thickness of 50 μm to 80 μm, specifically 50 μm to 75 μm, more specifically 60 μm to 75 μm. When the thickness of the lead adhesive layer 1903 satisfies the above numerical range, there is an effect of preventing penetrated pinholes and leaks at an edge portion during fusion between the electrode lead and the lead film.

## (5) Gas guide film

In an aspect, the gas guide film 200 serves to discharge gas from the inside of the battery case 110 to the outside. As shown in FIG. 2, the gas guide film 200 of the present invention may be disposed between the electrode lead 180 and the lead film 190. In this case, in the region between the electrode lead 180 and the lead film 190 where the gas guide film 200 is disposed, the electrode lead 180 and the lead film 190 may not be in direct contact, and in the region where the gas guide film 200 is not disposed, the electrode lead 180 and the lead film 190 may be in direct contact.

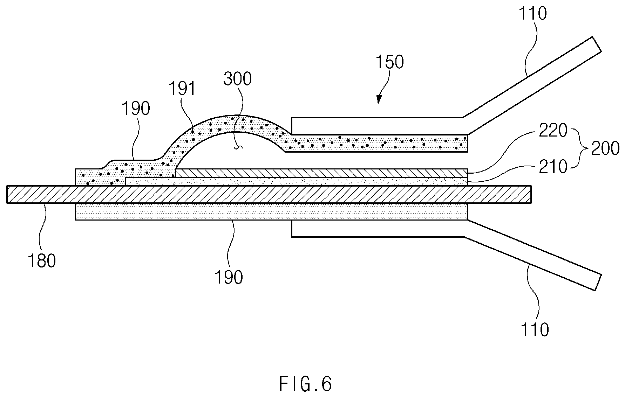

Hereinafter, the gas guide film 200 of the present invention will be described in more detail with reference to FIGS. 3 and 6. FIG. 3 shows a state before an interface between the gas guide film 200 and the lead film 190 of the pouch type secondary battery is opened, and FIG. 4 6 shows a state after an interface between the gas guide film 200 and the lead film 190 is opened.

As shown in FIGS. 3 and 6, an interface between the gas guide film 200 and the lead film 190 is normally unopened, and when pressure inside the battery case 110 increases due to gas generation, the interface between the gas guide film 200 and the lead film 190 is opened, thereby forming a gas discharge path 300. The gas inside the battery case 110 may move along the gas discharge path 300 and then pass through the lead film 190 to be discharged to the outside of the pouch. Accordingly, the pressure inside the battery case 110 may be reduced to prevent explosion or ignition of the battery case 110. In this case, the lead film 190 includes the inorganic particles 191, and may thus improve gas discharge rate, effectively prevent moisture penetration, and prevent corrosion of the electrode lead by absorbing hydrofluoric acid gas generated internally.

Meanwhile, as shown in FIGS. 3 and 4, the gas guide film 200 of the present invention includes an adhesive resin layer 210 in contact with the electrode lead 180 and a permeable resin layer 220 disposed on the adhesive resin layer 210.

The adhesive resin layer 210 is in contact with the electrode lead 180, and may be used to make the gas guide film 200 adhere to the electrode lead 180.

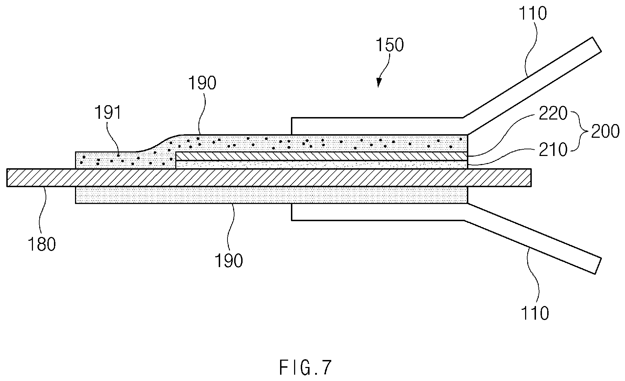

In an aspect, as shown in FIGS. 3 and 7, the adhesive resin layer 210 of the gas guide film 200 may be formed to extend further in an outer direction of the battery case than the permeable resin layer 220. As such, when the adhesive resin layer 210 is formed to protrude further outward of the battery case 110 than one end of the permeable resin layer 220, adhesion between the electrode lead 180 and the gas guide film 200 is strong, thereby preventing a decrease in durability due to an increase in internal pressure and frequent opening of the lead film 190 and the gas guide film 200, and easily securing an area of the gas permeable portion 230 on the permeable resin layer 220, enabling stable gas discharge.

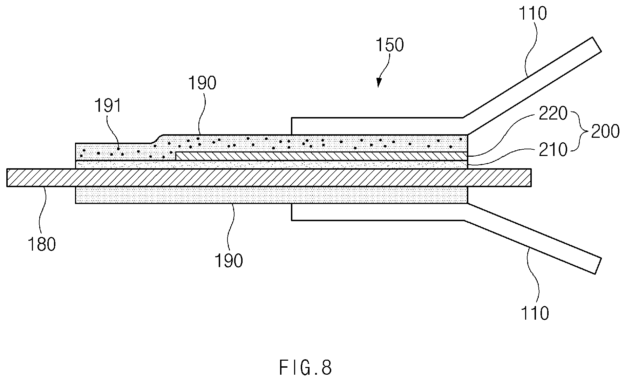

Alternatively, as described above in FIG. 8, the lead film 190 may be disposed such that one end protruding outward of the battery case 110 protrudes further than one end of the gas guide film 200 protruding outward of the battery case 110 so as to directly contact the electrode lead 180. As shown in FIG. 7, the adhesive resin layer 210 may be disposed such that one end protruding outward of the battery case 110 protrudes further than one end of the permeable resin layer 220 protruding outward of the battery case 110, but the lead film 190 is not in direct contact with the electrode lead 180 but rather in contact with the adhesive resin layer 210.

A case in which the arrangement structure of the lead film 190, the electrode lead 180, and the gas guide film 200 is formed as in FIG. 3, FIG. 7, or FIG. 8 is more favorable in terms of securing durability and an area of the permeable portion 230 than a case in which the lead film 190 is not disposed such that one end protrudes further outward from the battery case 110 than the permeable resin layer 220 of the gas guide film 200 but is disposed on the permeable resin layer 220 of the gas guide film 200. Most preferably, the arrangement may be as in FIG. 3, but the structure of FIG. 7 or FIG. 8 does not present any drawback in performance, and there may only be some differences in design or manufacturing processes.

The adhesive resin layer 210 may include any material that easily adheres to the electrode lead 180. Specifically, the adhesive resin layer 210 may include a modified polyolefin resin. When the adhesive resin layer 210 includes a modified polyolefin resin, adhesive strength between the gas guide film 200 and the electrode lead 180 is improved, and thus, even when a pouch type secondary battery is stored in a high-temperature environment, the gas guide film 200 may be prevented from being detached from the electrode lead 180 and pushed out of the pouch, or an electrolyte inside the pouch may be prevented from leaking.

The adhesive resin layer 210 may include at least one of acid modified polyolefin or silane-modified polyolefin.

The acid modified polyolefin indicates a polyolefin resin graft-modified with acid. For example, the acid modified polyolefin may be obtained by introducing a carboxyl group (graft modification) by reacting unsaturated carboxylic acid with a polyolefin resin. In this case, the unsaturated carboxylic acid may include the concept of a carboxylic acid anhydride, and the carboxyl group may include the concept of a carboxylic acid anhydride group. The unsaturated carboxylic acid subjected to reactions with a polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornedicarboxylic anhydride, and tetrahydrophthalic anhydride, but is not limited thereto. In particular, applying maleic anhydride is preferable to improve the adhesive force between the gas guide film 200 and the electrode lead 180. The acid modified polyolefin may include at least one selected from the group consisting of acid modified polypropylene (PPa) and acid modified polyethylene (PEa), but is not limited thereto.

The silane-modified polyolefin indicates a polyolefin resin graft-modified with an unsaturated silane compound. The silane-modified polyolefin may have a structure in which an unsaturated silane compound is graft-copolymerized to a polyolefin resin, which is a main chain. The silane-modified polyolefin resin may include at least one selected from the group consisting of a silane-modified polypropylene resin and a silane-modified ethylene-vinyl acetate copolymer, but is not limited thereto.

The adhesive resin layer 210 may be modification-treated, and examples of the modification treatment include ion implantation treatment, plasma treatment, irradiation treatment, heat treatment, and the like, and treatment that changes the bonding structure of a polymer layer is preferred. These modification treatments may be performed individually, or may be performed in combination of two or more types. The modification-treated adhesive resin layer 210 may include plasma-treated polypropylene (PP), but is not limited thereto.

The adhesive resin layer 210 may have a thickness of 5 μm to 130 μm, specifically 30 μm to 120 μm, and more specifically 30 μm to 80 μm. When the thickness of the adhesive resin layer 210 satisfies the above numerical range, the adhesive resin layer 210 melts within the specified production time (tact time) and accordingly, the gas guide film 200 and the electrode lead 180 may be easily fused.

The permeable resin layer 220 may be a layer in contact with the lead film 190.

The permeable resin layer 220 may include at least one of polytetrafluoroethylene (PTFE) or polyimide (PI), but is not limited thereto. In particular, when polyimide is included in the permeable resin layer 220, the adhesive force between the permeable resin layer 220 and the lead film 190 is reduced, and accordingly, a gas discharge path 300 may be preferably formed when the pressure inside the case 110 increases.

The permeable resin layer 220 may have a thickness of 40 μm to 100 μm, specifically 40 μm to 90 μm, and more specifically 45 μm to 75 μm. When the thickness of the permeable resin layer 220 satisfies the above range, the permeable resin layer 220 does not melt during the process of sealing, and when the pressure inside the case 110 increases, an interface between the permeable resin layer 220 and the lead film 190 may be lifted to form the gas discharge path 300.

Meanwhile, a ratio (D1/D2) of a thickness (D1) of the adhesive resin layer to a thickness (D2) of the permeable resin layer may be 0.4 to 2.0, specifically 0.4 to 1.5, and more specifically 0.4 to 1.0. When the ratio (D1/D2) satisfies the above numerical range, upon rising of the pressure inside the case 110, an interface between the permeable resin layer 220 and the lead film 190 is lifted to form a gas discharge path, and also the adhesive strength between the gas guide film 200 and the electrode lead 180 may be improved.

In an aspect, the gas discharge path 300 formed by the opening of the interface between the gas guide film 200 and the lead film 190 may include a gas permeable portion 230 formed on the outside of the sealing portion 151, and at least one gas channel 240 formed such that the gas permeable portion 230 and the inside of the battery case 110 are connected to each other via the sealing portion 151.

In addition, the gas guide film 200 may have at least one gas channel 240, preferably at least two, and there is no limitation on the number of channels. However, considering the processability and ease of gas guiding film production, it may be desirable to form at least two gas channels 240.

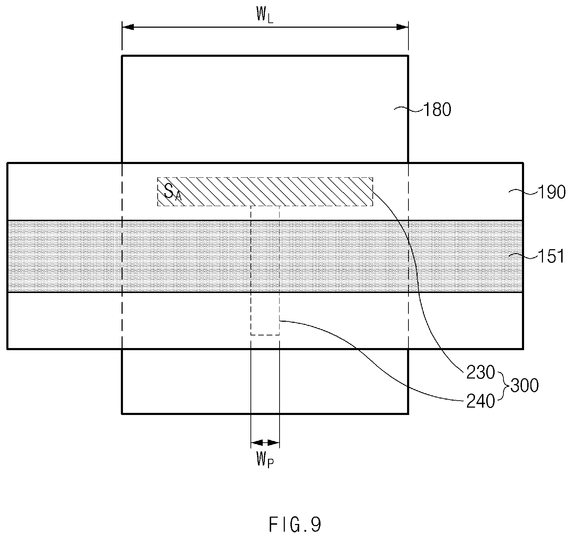

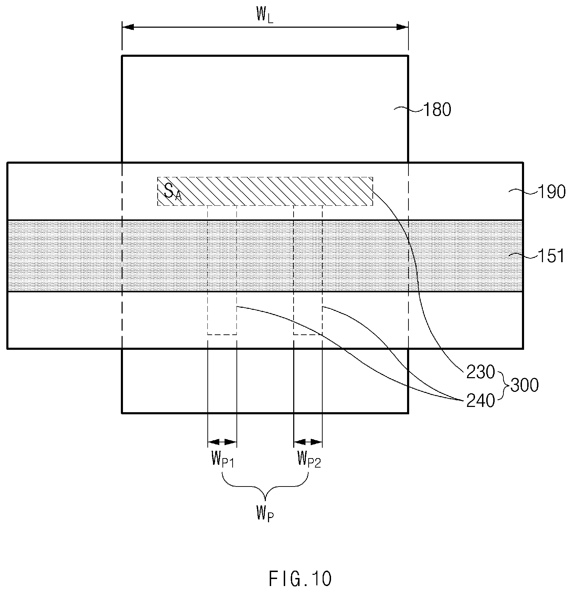

FIGS. 9 and 10 are top perspective views of an electrode lead 180 and a lead film 190 according to an embodiment, that is, a portion of box A in FIG. 2, when viewed from direction B, with a terrace portion 150 of a battery case 110 omitted, and a sealing portion 151, which is a sealed portion, depicted as an area. As described above, a gas guide film 200 is disposed on the electrode lead 180, and may be stacked in the order of an adhesive resin layer 210 and a permeable resin layer 220, a lead film 190 is disposed on the gas guide film 200, and a terrace portion 150 of a battery case 110 is disposed on the lead film 190, forming a packaged structure, and a sealing portion 151 may be formed on the terrace portion 150 through sealing.

Referring to FIG. 9, the gas guide film 200 and the lead film 190 form a gas discharge path 300 when an interface opens due to an increase in internal pressure of a pouch type secondary battery. A gas permeable portion 230, which is a portion through which gas permeates, is formed on the outside of the sealing portion 151, allowing gas captured through the gas channel 240 to be discharged through the lead film 190, and the gas channel 240 forms a path that connects the permeable portion 230 to the inside of the battery case 110 through the sealing portion 151, enabling gas to move to the gas permeable portion 230. The gas channel 240 may be formed as a single unit, in which case it may have a "T" shape as shown in FIG. 9, and two gas channels 240 may be formed, in which case it the channels may have a "TTˉ" shape as shown in FIG. 10.

In this case, the gas permeable portion 230 and the gas channel 240 may be distinguished by a dividing line horizontal to a width direction of the electrode lead 180, formed at a point where an angle of an extension line of the gas channel 240 changes with respect to a straight line in a length direction of the electrode lead 180 on the outside of the sealing portion 151 in the top perspective view of FIG. 9 or FIG. 10, and an inner region of the battery case 110 may be defined as the gas channel 240, and the outer region may be defined as the gas permeation portion 230.

The gas guide film may have a gas discharge coefficient ($C_R$) of 10 to 25, as defined by Equation 1 below.

$$C_R = 2(S_A/W_L) + W_P$$

In Equation 1, $W_P$ is a total width (mm) of at least one gas channel, $W_L$ is a width (mm) of an electrode lead, and $S_A$ is an area (mm$^2$) of a permeable portion.

The gas discharge coefficient is a value designed by the dimensions of a gas guide film, independent of its material, and is characterized by taking the area of the permeable portion, the width of the gas channel, and the width of the electrode lead as factors. A larger area of the permeable portion and a greater width of the gas channel are beneficial for gas discharge rate, but conversely, from the perspective of preventing moisture penetration and electrolyte leakage, larger dimensions present a greater potential for complications. In addition, when the area of the permeable portion on the gas guide film increases relative to the width of the electrode lead, the increase in gas discharge performance is not significant enough to justify the increase of the area of the permeable portion, making it an inappropriate design when considering the potential for moisture penetration and electrolyte leakage. Furthermore, when the width of the gas channel increases relative to the area of the permeable area, it forms a complex relationship where the gas discharge rate increases and the operating pressure decreases, but moisture penetration issues arise.

That is, the gas guide film exhibits excellent performance with a larger gas permeable portion area, but to improve gas discharge performance, moisture penetration prevention, and electrolyte leakage prevention, expanding the area of the permeable portion needs to be done under the constraints of the width of the electrode lead and the width of the gas channel. Accordingly, the gas guide film according to an embodiment of the present invention, having a gas discharge coefficient as defined in Equation 1, has a fast gas discharge rate, may prevent electrolyte leakage and moisture penetration, and may be operable at low internal pressure.

Preferably, the gas discharge coefficient may be 11 or greater, 12 or greater, 13 or greater, or 14 or greater, and may also be 24 or less, 23 or less, 22 or less, or 21 or less. When the gas discharge coefficient satisfies the above range, a gas guide film that may satisfy moisture penetration prevention performance and electrolyte leakage prevention performance along with gas discharge performance may be achieved.

In an aspect, the gas guide film may have a ratio ($S_A/W_L$) of the area ($S_A$) of the permeable portion to the width ($W_L$) of the electrode lead of 1.7 mm to 7.5 mm, preferably 1.9 mm or greater, 2.2 mm or greater, 2.5 mm or greater, or 2.7 mm or greater, and also preferably 7.0 mm or less, 6.5 mm or less, 6.0 mm or less, 5.5 mm or less, or 5.0 mm or less.

In an aspect, the gas guide film may have a total sum ($W_P$) of the gas channel widths of 6 mm to 20 mm. Preferably, the gas guide film may have a total sum ($W_P$) of the gas channel widths of 7 mm or greater, 8 mm or greater, 9 mm or greater, or 10 mm or greater, and 18 mm or less, 16 mm or less, 15 mm or less, or 14 mm or less.

In an aspect, the gas discharge coefficient of the gas guide film may be defined as the sum of "the ratio ($S_A/W_L$) of the area ($S_A$) of the permeable portion to the width ($W_L$) of the electrode lead " and "the total sum ($W_P$) of the gas channel widths". That is, when the sum of the area of the permeable portion and the width of the gas channel for the electrode lead is in a range of mutually appropriate values, that is, when the sum stays within an appropriate range to complement each other, it may be beneficial for gas discharge performance, and moisture penetration and electrolyte leakage prevention.

Furthermore, as batteries become larger and are designed in modules and packs, there may be various variables such as a battery cell itself becoming larger or a plurality of small battery cells being assembled, but for the gas discharge coefficient, by reflecting the size of the battery cell through the width of the electrode lead, an appropriate design point may be identified within a three-way trade-off relationship among gas discharge rate, moisture penetration, and operating pressure, depending on the quantity of gas generated.

Accordingly, the pouch type secondary battery described in this specification, equipped with the above-described gas guide film and including inorganic particles in a gas-permeable lead film, enables gas discharge at exceptionally high rate under low operating pressures, offers excellent prevention of electrolyte leakage and moisture penetration, and minimized corrosion from gas, moisture penetration, or electrolyte leakage, thereby enhancing durability for longer life, maintaining cell operating performance through continuous gas discharge, and reducing swelling-related explosion risks, thus ensuring safety.

## (6) Electrolyte

In an aspect, the pouch type secondary battery 100 may further include an electrolyte (not shown) injected into the battery case 110. The electrolyte is used to move lithium ions generated through electrochemical reactions of an electrode upon charging/discharging of the secondary battery 100, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

## Battery box

In an aspect, provided is a battery box including the pouch type secondary battery. The battery box may include the pouch type secondary battery and a packaging in which the pouch type secondary battery is accommodated. The pouch type secondary battery may be configured to charge and discharge electric energy, and in this case, the pouch type secondary battery may be a secondary battery according to an embodiment of the present specification described above.

To increase the electric capacity or voltage of the battery box, a plurality of the pouch type secondary battery may be configured. The plurality of pouch type secondary batteries may be arranged in a predetermined manner, for example, may be stacked in one direction, but the arrangement method of the pouch type secondary batteries is not particularly limited.

The packaging may be configured to accommodate the secondary battery and protect the secondary battery from external contamination or impact. For example, the packaging may have a casing shape, but the structure or shape of the packaging is not particularly limited as long as it is capable of accommodating the secondary battery.

In addition, components that perform a predetermined function may be installed in the packaging for the operation or safety of the battery box according to an embodiment of the present invention. For example, The packaging may also be equipped with connectors or busbars to electrically connect the secondary battery to the outside, and a vent plug to connect the inside and outside of the packaging.

The battery box may be used to include, for example, a battery module or a battery pack, and may encompass an assembly of a packaging and a battery cell in which a plurality of secondary batteries are accommodated within the packaging.

**Electrical device**

In an aspect, provided is an electrical device including the battery box. The battery box may be included in the electrical device and used as a power source for the electrical device.

The electrical device may be at least any one medium and large sized device, for example, a power tool; electric cars including an electric vehicle (EV), a hybrid electric vehicle, and a plug-in hybrid electric vehicle (PHEV); or a power storage system.

Hereinafter, the present invention will be described in more detail through specific embodiments. however, Examples shown below are illustrated only for the understanding of the present invention, and the scope of the present invention is not limited thereto. It will be apparent to those skilled in the art that various modifications and alterations are possible within the scope and technical range of the present invention, and such modifications and alterations fall within the scope of claims included herein.

**Examples and Comparative Examples**

**Example 1**

(1) Manufacture of battery case

A polyethylene terephthalate (PET) film having a width of 266 mm, a length of 50 m, and a thickness of 12 $\mu$m and a nylon film having a width of 266 mm, a length of 50 m, and a thickness of 25 $\mu$m were stacked on one side of an aluminum alloy thin film having a width of 266 mm, a length of 50 m, and a thickness of 60 $\mu$m, and a polypropylene film having a width of 266 mm, a length of 50 m, and a thickness of 80 $\mu$m was stacked on the other side to prepare a pouch film laminate having a structure of polyethylene terephthalate/nylon/aluminum alloy thin film/polypropylene film.

In this case, the polyethylene terephthalate film and the nylon film are base layers, the aluminum alloy thin film is a gas barrier layer, and the polypropylene film is a sealant layer.

The pouch film laminate was molded to manufacture a battery case including an accommodation portion and a sealing portion.

(2) Manufacture of pouch type secondary battery

A negative electrode, a positive electrode, and a porous polyethylene separator were assembled using a stacking method, and then laminated to manufacture an electrode assembly. Thereafter, an electrode lead was coupled to the electrode assembly.

LiPF$_6$ was dissolved in a solvent (EC:EMC:DMC = volume ratio of 3:3:4 ) to 1.0 M to prepare an electrolyte. The electrode assembly was accommodated in the battery case with a front end of the electrode lead protruding to the outside, and the electrolyte was injected.

A 40 $\mu$m thick acid modified polypropylene film (adhesive resin layer) and a 50 $\mu$m thick polytetrafluoroethylene film (permeable resin layer) were stacked on an upper surface of the electrode lead to form a gas guide film.

Then, a 200 $\mu$m thick lead film was stacked on each of a lower surface of the electrode lead and an upper surface of the gas guide film. The lead film may include a 75 $\mu$m thick lead adhesive layer containing copolymer polypropylene and acid modified polypropylene, a 65 μm thick core layer containing homopolymer polypropylene, and a 60 μm thick pouch adhesive layer containing copolymer polypropylene, and 8 wt% of $CaCO_3$ was provided as inorganic particles in the core layer with respect to a total weight of the core layer to form the lead film.

Thereafter, the sealing portion of the battery case was sealed for 2 seconds in the conditions of a seal bar area of 200 mm × 10 mm, 220°C, and 0.27 MPa, and then left at 60°C for 4 hours to manufacture a pouch type secondary battery. In this case, of the terrace portion, the portion where the gas guide film is formed has a structure in which lower case/lead film/electrode lead/gas guide film/lead film/upper case are sequentially stacked.

**Example 2**

A pouch type secondary battery was manufactured in the same manner as in Example 1, except that 8 wt% of $CaCO_3$ was provided as inorganic particles in each of the core layer and the lead adhesive layer of the lead film with respect to a total weight of each layer.

**Comparative Example 1**

A pouch type secondary battery was manufactured in the same manner as in Example 1, except that a lead film with no inorganic particles was applied.

**Experimental Example 1: Measurement of gas discharge rate**

Gas discharge rate was measured for the pouch type secondary batteries each manufactured in Examples 1 and 2 and Comparative Example 1.

Specifically, $CO_2$ was injected into the pouch type secondary batteries using pressure equipment from ITS Corporation to increase the pressure inside the pouch to 1.5 atm and 2.0 atm, and an amount of gas discharged every 24 hours was measured for 72 hours, and the results are shown in Table 1 below.

[Table 1]

|  | Gas discharge rate @1.5 atm (cc/day) | | | | Gas discharge rate @2.0 atm (cc/day) | | |
|---|---|---|---|---|---|---|---|
|  | Day 1 | Day 2 | Day 3 | Average | Day 1 | Day 2 | Average |
| Example 1 | 9.2 | 8.7 | 9.9 | 9.3 | 16.8 | 16.8 | 16.8 |
| Example 2 | 10.5 | 10.9 | 11.1 | 10.8 | 17.3 | 17.9 | 17.6 |
| Comparative Example 1 | 7.1 | 8.9 | 7.3 | 7.8 | 13.7 | 12.2 | 13.0 |

Referring to Table 1 above, it is determined that Examples 1 and 2, which include inorganic particles, show a significantly improved gas discharge rate compared to Comparative Example 1. In particular, it is determined that the difference was even more pronounced when the internal pressure was high, indicating that Examples 1 and 2 may be more suitably applied to cells with high gas generation, and even if not, Examples 1 and 2 may significantly contribute to ensuring safety.

**Experimental Example 2: Measurement of moisture penetration (measurement of HF concentration)**

HF concentration was measured to evaluate moisture penetration for the pouch type secondary batteries each manufactured in Examples 1 and 2 and Comparative Example 1.

The pouch type secondary battery was left under conditions of 60°C and 90% relative humidity for 16 weeks, the secondary battery was then opened and HF concentration in an electrolyte was measured for evaluation, and the results are shown in Table 2 below.

[Table 2]

|  | HF concentration | | |
|---|---|---|---|
|  | Week 2 | Week 8 | Week 16 |
| Example 1 | 431.8 | 2346 | 4201 |
| Example 2 | 425.2 | 2332 | 4177 |

(continued)

| | HF concentration | | |
|---|---|---|---|
| | Week 2 | Week 8 | Week 16 |
| Comparative Example 1 | 444.4 | 2453 | 4212 |

Referring to Table 2 above, it is determined that Examples 1 and 2 show a reduction in moisture penetration compared to Comparative Example 1. While the difference in effect might not be considered significant, it is generally observed that designs aimed at increasing gas discharge rate or volume are consistently accompanied by a rise in moisture penetration. However, Examples 1 and 2 show an improved performance in gas discharge without a concurrent increase in moisture penetration, compared to Comparative Example 1, confirming that the pouch type secondary battery according to an embodiment of the present invention may improve gas discharge performance without increasing moisture penetration.

Description of Symbols

100:     Pouch type secondary battery
110:     Battery case
120:     First case
122:     Cup portion
124:     Accommodation portion
130:     Second case
132:     Cup portion
140:     Bridge portion
150:     Terrace portion
151:     Sealing portion
160:     Electrode assembly
170:     Electrode tab
172:     Positive electrode tab
174:     Negative electrode tab
180:     Electrode lead
182:     Positive electrode lead
184:     Negative electrode lead
190:     Lead film
191:     Inorganic particles
1901:    Pouch adhesive layer
1902:    Core layer
1903:    Lead adhesive layer
200:     Gas guide film
210:     Adhesive resin layer
220:     Permeable resin layer
230:     Permeable portion
240:     Gas channel
300:     Gas discharge path

**Claims**

1. A pouch type secondary battery comprising:

an electrode assembly;
a battery case comprising an accommodation portion for accommodating the electrode assembly and a terrace portion formed along a perimeter of the accommodation portion;
an electrode lead connected to the electrode assembly and protruding to the outside of the battery case via the terrace portion;
a lead film disposed between the electrode lead and the battery case; and

a gas guide film disposed between the electrode lead and the lead film,
wherein the terrace portion comprises a sealing portion with a portion thereof sealed along the perimeter of the accommodation portion, and
the lead film comprises inorganic particles.

2.  The pouch type secondary battery of claim 1, wherein upon an increase in internal pressure of the battery case, an interface between the lead film and the gas guide film opens to form a gas discharge path.

3.  The pouch type secondary battery of claim 2, wherein the gas discharge path is provided with a gas permeable portion formed on the outside of the sealing portion, and at least one gas channel formed via the sealing portion, connecting the gas permeable portion and the inside of the battery case.

4.  The pouch type secondary battery of claim 1, wherein the lead film has a structure in which a pouch adhesive layer, a core layer, and a lead adhesive layer are sequentially stacked, and the inorganic particles are provided in at least one layer selected from the group consisting of the core layer and the lead adhesive layer.

5.  The pouch type secondary battery of claim 1, wherein the lead film has a structure in which a pouch adhesive layer, a core layer, and a lead adhesive layer are sequentially stacked, and the inorganic particles are provided in the core layer.

6.  The pouch type secondary battery of claim 5, wherein the inorganic particles are further provided in the lead adhesive layer.

7.  The pouch type secondary battery of claim 1, wherein the inorganic particles comprise at least one selected from the group consisting of $CaCO_3$, $Ca(OH)_2$, $CaCl_2$, CaO, KOH, NaOH, and $Na_2CO_3$.

8.  The pouch type secondary battery of claim 1, wherein the inorganic particles are provided in an amount of 1 wt% to 20 wt% with respect to a total weight of the lead film.

9.  The pouch type secondary battery of claim 1, wherein the lead film is disposed such that one end protruding outward of the battery case protrudes further than one end of the gas guide film protruding outward of the battery case and is in direct contact with the electrode lead.

10. The pouch type secondary battery of claim 1, wherein the gas guide film has a structure in which an adhesive resin layer and a permeable resin layer are stacked from an upper surface of the electrode lead.

11. The pouch type secondary battery of claim 10, wherein the adhesive resin layer comprises at least one selected from the group consisting of acid modified polypropylene (PPa) and acid modified polyethylene (Pea).

12. The pouch type secondary battery of claim 10, wherein the permeable resin layer comprises at least one selected from the group consisting of polyimide (PI) and polytetrafluoroethylene (PTFE).

13. The pouch type secondary battery of claim 10, wherein a ratio (D1/D2) of a thickness (D1) of the adhesive resin layer to a thickness (D2) of the permeable resin layer is 0.4 to 2.0.

14. The pouch type secondary battery of claim 10, wherein in the adhesive resin layer, one end protruding outward of the battery case protrudes further than one end of the permeable resin layer protruding outward of the battery case.

15. A battery box comprising the pouch type secondary battery according to claim 1; and a packaging for accommodating the pouch type secondary battery.

FIG.1

FIG.2

F I G . 3

FIG.4

FIG.5

FIG.6

FIG.7

FIG.8

FIG.9

FIG.10

## INTERNATIONAL SEARCH REPORT

| International application No. |
|---|
| **PCT/KR2025/006743** |

| A. | CLASSIFICATION OF SUBJECT MATTER |
|---|---|

**H01M 50/317**(2021.01)i; **H01M 50/30**(2021.01)i; **H01M 50/105**(2021.01)i; **B32B 7/12**(2006.01)i; **C09J 123/30**(2006.01)i; **C09J 11/04**(2006.01)i

According to International Patent Classification (IPC) or to both national classification and IPC

| B. | FIELDS SEARCHED |
|---|---|

Minimum documentation searched (classification system followed by classification symbols)

H01M 50/317(2021.01); H01M 10/04(2006.01); H01M 2/02(2006.01); H01M 50/116(2021.01); H01M 50/178(2021.01); H01M 50/186(2021.01); H01M 50/30(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 리드 필름(lead film), 무기 입자(inorganic particle), 가스 유도 필름(gas guiding film)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0043034 A (LG ENERGY SOLUTION, LTD.) 05 April 2022 (2022-04-05) see paragraphs [0003], [0035], [0041], [0048]-[0050], [0058]; figures 1-3. | 1-8,15 |
| Y | | 9-14 |
| Y | KR 10-2022-0121748 A (LG ENERGY SOLUTION, LTD.) 01 September 2022 (2022-09-01) see paragraphs [0037], [0042]-[0043]; figure 4. | 9 |
| Y | KR 10-2022-0007511 A (LG ENERGY SOLUTION, LTD.) 18 January 2022 (2022-01-18) see paragraphs [0046]-[0047], [0049]-[0052]; figure 4. | 10-14 |
| A | KR 10-2017-0107740 A (LG CHEM, LTD.) 26 September 2017 (2017-09-26) see entire document. | 1-15 |
| A | US 2011-0117425 A1 (KWAK, JUNG-SUP et al.) 19 May 2011 (2011-05-19) see entire document. | 1-15 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 August 2025** | **14 August 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/006743**

| Patent document cited in search report | | | Publication date (day/month/year) | Patent family member(s) | | | Publication date (day/month/year) |
|---|---|---|---|---|---|---|---|
| KR | 10-2022-0043034 | A | 05 April 2022 | CN | 115769426 | A | 07 March 2023 |
| | | | | EP | 4148886 | A1 | 15 March 2023 |
| | | | | EP | 4148886 | A4 | 10 July 2024 |
| | | | | JP | 2023-525540 | A | 16 June 2023 |
| | | | | JP | 7631373 | B2 | 18 February 2025 |
| | | | | KR | 10-2736109 | B1 | 02 December 2024 |
| | | | | US | 2023-0216133 | A1 | 06 July 2023 |
| | | | | WO | 2022-065947 | A1 | 31 March 2022 |
| KR | 10-2022-0121748 | A | 01 September 2022 | CN | 115552703 | A | 30 December 2022 |
| | | | | EP | 4195379 | A1 | 14 June 2023 |
| | | | | EP | 4195379 | A4 | 20 November 2024 |
| | | | | JP | 2023-526827 | A | 23 June 2023 |
| | | | | JP | 7512431 | B2 | 08 July 2024 |
| | | | | KR | 10-2815124 | B1 | 30 May 2025 |
| | | | | US | 2023-0170564 | A1 | 01 June 2023 |
| | | | | WO | 2022-182210 | A1 | 01 September 2022 |
| KR | 10-2022-0007511 | A | 18 January 2022 | CN | 115210947 | A | 18 October 2022 |
| | | | | CN | 115210947 | B | 17 September 2024 |
| | | | | EP | 4131614 | A1 | 08 February 2023 |
| | | | | EP | 4131614 | A4 | 04 October 2023 |
| | | | | JP | 2023-521312 | A | 24 May 2023 |
| | | | | KR | 10-2790602 | B1 | 04 April 2025 |
| | | | | US | 2023-0318133 | A1 | 05 October 2023 |
| | | | | WO | 2022-010256 | A1 | 13 January 2022 |
| KR | 10-2017-0107740 | A | 26 September 2017 | None | | | |
| US | 2011-0117425 | A1 | 19 May 2011 | CN | 102074726 | A | 25 May 2011 |
| | | | | CN | 102074726 | B | 27 April 2016 |
| | | | | EP | 2325918 | A1 | 25 May 2011 |
| | | | | EP | 2325918 | B1 | 27 July 2016 |
| | | | | JP | 2011-108624 | A | 02 June 2011 |
| | | | | JP | 5194059 | B2 | 08 May 2013 |
| | | | | KR | 10-1097253 | B1 | 21 December 2011 |
| | | | | KR | 10-2011-0055254 | A | 25 May 2011 |

Form PCT/ISA/210 (patent family annex) (July 2022)

**EP 4 765 414 A1**

**REFERENCES CITED IN THE DESCRIPTION**

**Patent documents cited in the description**

- KR 1020240066764